(19) Europäisches Patentamt / European Patent Office / Office européen des brevets

(11) **EP 2 509 213 A2**

(12) **EUROPEAN PATENT APPLICATION**

(43) Date of publication:
   **10.10.2012 Bulletin 2012/41**

(51) Int Cl.:
   **H02P 29/02** (2006.01)   **H02P 21/00** (2006.01)

(21) Application number: **12002210.8**

(22) Date of filing: **27.03.2012**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **05.04.2011 JP 2011083738**

(71) Applicant: **IHI Aerospace Co., Ltd.**
   **Koto-Ku**
   **Tokyo 135-0061 (JP)**

(72) Inventors:
   • **Oyori, Hitoshi**
     **Toyo 135-0061 (JP)**
   • **Saito, Hiroshi**
     **Mie 516-8550 (JP)**

(74) Representative: **Goddar, Heinz J.**
   **Boehmert & Boehmert**
   **Pettenkoferstrasse 20-22**
   **80336 München (DE)**

(54) **Brushless motor and control method therefor**

(57)   When a fault of any one of phases is detected by a fault detector, each of the phases is checked for fault on the basis of fault detection information input to a controller, and the phases of normal phase currents which have been judged to be not faulty by a faulty phase discriminator are varied such that a current vector obtained by decomposing the normal phase currents into orthogonal X- and Y-axis components to derive resultant currents and then combining the resultant currents follows a nearly circular locus.

FIG. 1

EP 2 509 213 A2

**Description**

**BACKGROUND OF THE INVENTION**

**Field of the Invention**

The present invention relates to brushless motors and control methods therefor, and more particularly, to a brushless motor for use in aircrafts and in the aerospace field, and a control method for such a brushless motor.

**Description of the Related Art**

As conventional brushless motors, a three-phase brushless motor illustrated in FIG. 7 has been known, for example (cf. Japanese Laid-open Patent Publication No. 2002-369586).

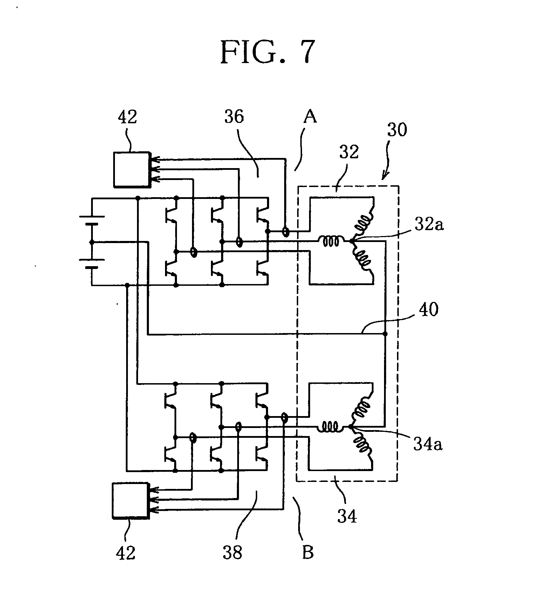

As illustrated in FIG. 7, the brushless motor 30 is provided with two, A and B series of windings 32 and 34, and the windings 32 and 34 are connected to respective inverters 36 and 38. A neutral line 40 is connected to both of a neutral point 32a of the star connection of the A-series winding 32 and a neutral point 34a of the star connection of the B-series winding 34. Phase currents of the windings 32 and 34 are fed back to respective interface circuits 42,42 through the respective inverters 36 and 38 for purposes of current control.

Although the conventional technique employs a redundant configuration, a problem arises in that the motor fails to rotate if one of the two, A and B series of windings 32 and 34 develops a fault and also if even one of the three phases of the other normal series winding develops a fault or is damaged due to partial failure of the inverter associated therewith.

Also, the use of redundant configuration leads to complexity of circuitry and thus is not desirable.

**SUMMARY OF THE INVENTION**

The present invention was made to solve the above problems, and an object thereof is to provide a brushless motor which is simple in circuit configuration and by which, even if one of multiple phases of windings develops a fault or is damaged due to partial failure of an inverter, a missing phase current can be compensated, and a control method for the brushless motor.

To achieve the object, the present invention provides a brushless motor having windings of multiple phases connected to an inverter, comprising: a neutral line connecting a neutral point of a power supply and a neutral point of a star connection of the windings to each other; a fault detector configured to detect a fault of the windings of the multiple phases and output fault detection information including information about presence or absence of fault of the individual phases; a faulty phase discriminator configured to determine, based on the fault detection information, whether each of the multiple phases is faulty or not if fault of any one of the multiple phases has been detected by the fault detector; and a phase controller configured to vary phases of normal phase currents which have been judged to be not faulty by the faulty phase discriminator such that a current vector obtained by decomposing the normal phase currents into orthogonal X- and Y-axis components to derive resultant currents and then combining the resultant currents follows a nearly circular locus.

Thus, even in the case where any one of the multiple-phase windings develops a fault or any one of the phase currents ceases to flow due to partial failure of the inverter, the motor can be rotated even after the occurrence of such a fault because current flows through the neutral line. Also, since current supply can be stabilized by varying the phases of the normal phase currents such that the current vector of the resultant currents follows a nearly circular locus, torque ripple decreases, enabling stable operation control.

Further, when fault is detected, the phase controller automatically executes the current phase control without delay, so that the motor operation control is stabilized, making it possible to improve reliability.

Preferably, the brushless motor further comprises a gain corrector configured to amplify the individual phase currents of the windings.

Since the phase currents of the respective windings can be amplified by the gain corrector, torque running short because of the fault can be compensated by the amplified currents, making it possible to further stabilize the motor operation control.

Also, to achieve the above object, the present invention provides a control method for controlling a brushless motor having windings of multiple phases connected to an inverter, comprising: a fault detection step of detecting a fault of the windings of the multiple phases and outputting fault detection information including information about presence or absence of fault of the individual phases; a faulty phase discrimination step of determining, based on the fault detection information, whether each of the multiple phases is faulty or not if fault of any one of the multiple phases has been detected in the fault detection step; and a phase control step of varying phases of normal phase currents which have been judged to be not faulty in the faulty phase discrimination step such that a current vector obtained by decomposing the normal phase currents into orthogonal X- and Y-axis components to derive resultant currents and then combining the resultant currents follows a nearly circular locus.

Thus, the phases of the normal phase currents are varied such that the current vector of the resultant currents follows a nearly circular locus, and since the current supply can be stabilized as a result, torque ripple decreases, enabling stable motor operation control.

Further, when fault is detected, the current phase control is automatically executed in the phase control step without delay, so that the motor operation control is stabilized, making it possible to improve reliability.

Preferably, the control method further comprises a gain correction step, executed after the phase control step, of amplifying the individual phase currents of the windings.

The phase currents of the respective windings are amplified in the gain correction step, whereby stability of the motor operation control can be further improved.

## BRIEF DESCRIPTION OF THE DRAWINGS

The present invention will become more fully understood from the detailed description given hereinafter and the accompanying drawings which are given by way of illustration only, and thus, are not limitative of the present invention, and wherein:

FIG. 1 is a circuit diagram of a brushless motor according to the present invention;

FIG. 2A is a graph plotting waveforms of U-, V- and W-phase currents flowing in the brushless motor during normal operation;

FIG. 2B is a graph plotting waveforms of resultant currents observed during normal operation;

FIG. 2C is a vector diagram of the resultant currents observed during normal operation;

FIG. 3 is a flowchart illustrating a control method for controlling the brushless motor of the present invention at the time of failure;

FIG. 4A is a graph plotting waveforms of the U-, V- and W-phase currents flowing in the brushless motor at the time of failure;

FIG. 4B is a graph plotting waveforms of resultant currents observed at the time of failure;

FIG. 4C is a vector diagram of the resultant currents observed at the time of failure;

FIG. 5A is a graph plotting waveforms of the U-, V- and W-phase currents flowing in the brushless motor after phase control is executed following the occurrence of failure;

FIG. 5B is a graph plotting waveforms of the resultant currents observed after the phase control is executed following the occurrence of failure;

FIG. 5C is a vector diagram of the resultant currents observed after the phase control is executed following the occurrence of failure;

FIG. 6A is a graph plotting waveforms of the U-, V- and W-phase currents flowing in the brushless motor after gain correction is executed following the phase control;

FIG. 6B is a graph plotting waveforms of the resultant currents observed after the gain correction is executed following the phase control;

FIG. 6C is a vector diagram of the resultant currents observed after the gain correction is executed following the phase control; and

FIG. 7 is a circuit diagram of a conventional brushless motor.

## DETAILED DESCRIPTION OF THE INVENTION

An embodiment of the present invention will be described below with reference to the accompanying drawings.

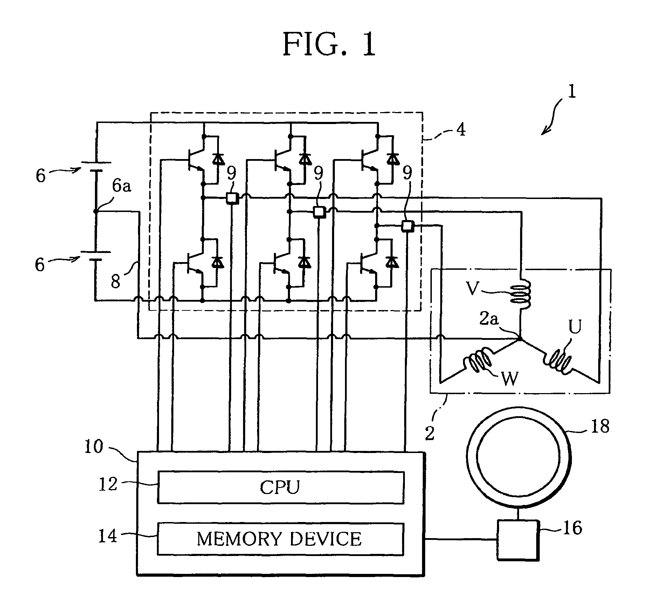

FIG. 1 is a circuit diagram of a brushless motor according to the present invention.

As illustrated in FIG. 1, the brushless motor 1 has a three-phase winding 2 connected to an inverter 4. The three-phase winding 2 includes U-, V- and W-phase windings connected together at a neutral point 2a, thus forming a star connection. The neutral point 2a of the star connection of the three-phase winding 2 is connected to a neutral point 6a of a power supply 6 by a neutral line 8.

If any one of three phase currents of the three-phase winding 2 ceases to flow due to partial failure of the inverter 4 or if fault occurs in any one of the three phases of the three-phase winding 2, current flows through the neutral line 8, so that the mode of connection changes from the star connection to V connection.

The phase currents of the three-phase winding 2 are detected by respective current sensors (fault detectors) 9 each inserted in a line connecting the inverter 4 to the three-phase winding 2. Electrical signals indicative of the respective detected currents are supplied to a controller 10.

The controller 10 comprises a central processing unit (hereinafter referred to as CPU) 12 and a memory device 14 including ROM, RAM and the like. The memory device 14 stores programs, and the CPU 12 executes the programs to control the outputs of the inverter 4.

Also, the controller 10 is connected with a rotor detector 16. The rotor detector 16 detects the rotational angle of a rotor 18 and supplies the detected rotational angle to the controller 10.

When the brushless motor 1 is operating normally with a symmetrical three-phase alternating current passed through the three-phase winding 2, U-, V- and W-phase currents are given by the following equations (1) to (3), respectively:

$$Iu = \mathrm{Im} \cdot \sin(\omega t) \qquad \cdots (1)$$

$$Iv = \mathrm{Im} \cdot \sin\left(\omega t - \frac{2\pi}{3}\right) \qquad \cdots (2)$$

$$Iw = \mathrm{Im} \cdot \sin\left(\omega t - \frac{4\pi}{3}\right) \qquad \cdots (3)$$

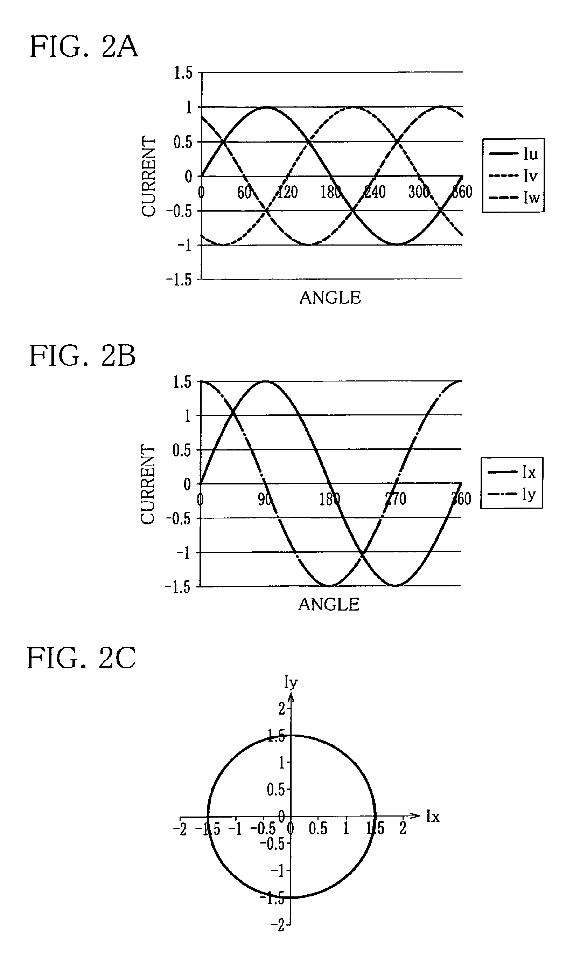

The waveforms of the respective phase currents are illustrated in FIG. 2A. Im represents herein a line current, and in the graphs of FIGS. 2 and 4 to 6, the line current is equal to "1" (Im = 1).

The individual phase currents are then decomposed into two orthogonal X- and Y-axis components. The X-axis components of the respective phase currents are given by the following equations (4) to (6), and the Y-axis components of the respective phase currents are given by the following equations (7) to (9):

$$Iux = \mathrm{Im} \cdot \sin(\omega t) \qquad \cdots (4)$$

$$Ivx = \mathrm{Im} \cdot \sin\left(\omega t - \frac{2\pi}{3}\right) \cdot \cos\left(-\frac{2\pi}{3}\right) \qquad \cdots (5)$$

$$Iwx = \mathrm{Im} \cdot \sin\left(\omega t - \frac{4\pi}{3}\right) \cdot \cos\left(\frac{2\pi}{3}\right) \qquad \cdots (6)$$

$$Iuy = 0 \qquad \cdots (7)$$

$$Ivy = \mathrm{Im} \cdot \sin\left(\omega t - \frac{2\pi}{3}\right) \cdot \sin\left(-\frac{2\pi}{3}\right) \qquad \cdots (8)$$

$$Iwy = \mathrm{Im} \cdot \sin\left(\omega t - \frac{4\pi}{3}\right) \cdot \sin\left(\frac{2\pi}{3}\right) \qquad \cdots (9)$$

A resultant current Ix of combining the X-axis components of the respective phase currents and a resultant current Iy of combining the Y-axis components of the respective phase currents are given by equations (10) and (11), respectively:

$$Ix = Iux + Ivx + Iwx = \text{Im} \cdot \left\{ \sin(\omega t) - \frac{1}{2}\sin\left(\omega t - \frac{2\pi}{3}\right) - \frac{1}{2}\sin\left(\omega t - \frac{4\pi}{3}\right) \right\} = \frac{3}{2}\text{Im} \cdot \sin(\omega t)$$

$$\cdots (10)$$

$$Iy = Ivy + Iwy = \text{Im} \cdot \left\{ -\frac{\sqrt{3}}{2}\sin\left(\omega t - \frac{2\pi}{3}\right) + \frac{\sqrt{3}}{2}\sin\left(\omega t - \frac{4\pi}{3}\right) \right\} = \frac{3}{2}\text{Im} \cdot \cos(\omega t)$$

$$\cdots (11)$$

FIG. 2B illustrates waveforms of the resultant currents Ix and Iy. A rotating current vector based on the resultant currents follows a nearly circular locus, as illustrated in FIG. 2C. During normal operation, the phase of the current is: arctan $(\cos\omega t/\sin\omega t) = \pi/2 - \omega t$.

If a fault occurs in the brushless motor 1 of the present invention configured as stated above, the brushless motor 1 is controlled by a method explained below.

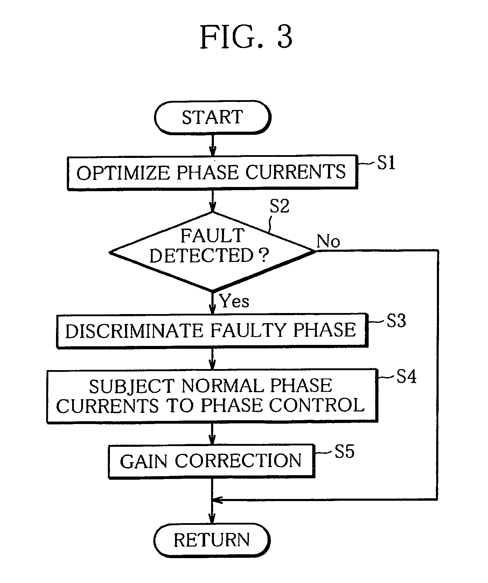

FIG. 3 is a flowchart illustrating the method of controlling the brushless motor 1 in the event one of the three phases of the three-phase winding 2 develops a fault. The flowchart shows the contents of software stored as a program in the memory device 14 of the controller 10 and executed by the CPU 12 at predetermined intervals of time.

In Step S1 the rotational angle of the rotor 18 is acquired from the rotor detector 16, and the outputs of the inverter 4 are adjusted so that the phases of the individual phase currents (U-, V- and W-phase currents) of the three-phase winding 2 may be optimized.

Specifically, the outputs of the inverter 4 are controlled such that the phase difference between adjacent two of the three phase currents is equal to 120°, as in the phases of the respective phase currents illustrated in FIG. 2A.

In Step S2, it is determined on the basis of the electrical signals supplied from the respective current sensors 9 whether or not a fault has been detected with respect to the three-phase winding 2 as a whole (fault detection step). If the result of the determination is affirmative (Yes), the control routine proceeds to Step S3; if the result of the determination is negative (No), the control routine is ended.

Then, in Step S3, a faulty phase is discriminated (faulty phase discriminator; faulty phase discrimination step). Such a faulty phase is discriminated on the basis of the electrical signals input in Step S2. In the following description of the embodiment, it is assumed that a short-circuit fault has occurred in the section of the inverter 4 connected to the U phase of the three-phase winding 2.

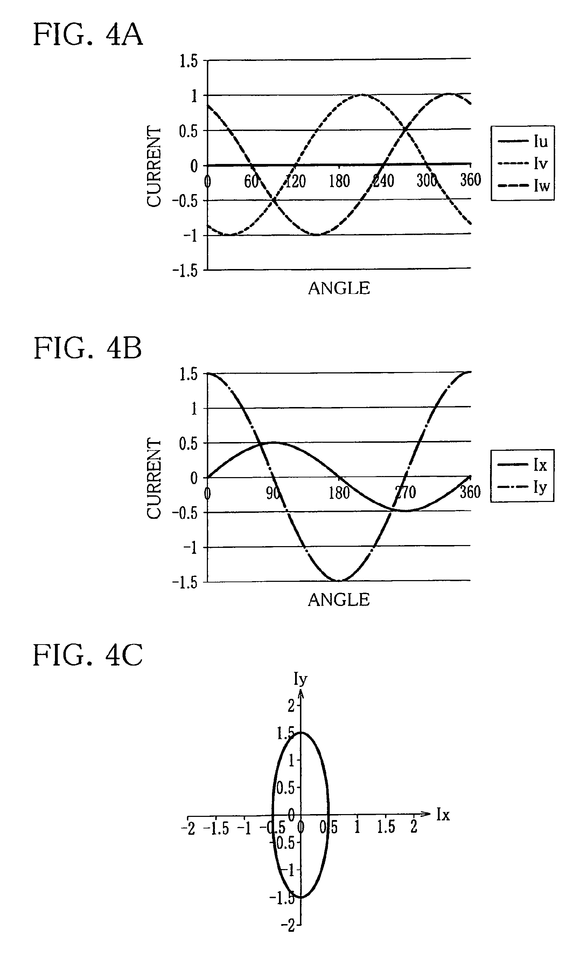

In the case where the U-phase section of the inverter 4 has developed a short-circuit fault, current flows through the neutral line 8 and the mode of connection changes to a V connection wherein the V- and W-phase windings are electrically connected to each other. As a result, only the V- and W-phase currents flow, as illustrated in FIG. 4A.

In this case, the resultant current Ix of combining the X-axis components of the respective phase currents and the resultant current Iy of combining the Y-axis components of the respective phase currents are given by the following equations (12) and (13), respectively:

$$Ix = Ivx + Iwx = \text{Im} \cdot \left\{ -\frac{1}{2}\sin\left(\omega t - \frac{2\pi}{3}\right) - \frac{1}{2}\sin\left(\omega t - \frac{4\pi}{3}\right) \right\} = \frac{1}{2}\text{Im} \cdot \sin(\omega t) \qquad \cdots (12)$$

$$Iy = Ivy + Iwy = Im \cdot \left\{ -\frac{1}{2}\sin\left(\omega t - \frac{2\pi}{3}\right) + \frac{1}{2}\sin\left(\omega t - \frac{4\pi}{3}\right) \right\} = \frac{3}{2}Im \cdot \cos(\omega t)$$

$$\cdots (13)$$

The resultant current Ix is smaller in magnitude than the resultant current Iy as illustrated in FIG. 4B, and the rotating current vector follows an elliptic locus as illustrated in the vector diagram of FIG. 4C. Since the torque for rotating the motor runs short at portions where the current is deficient, the motor fails to be smoothly rotated.

Subsequently, in Step S4, the phases of the normal phase currents are controlled (phase controller, phase control step). Specifically, the phases of the current are shifted so as to obtain a phase of the current identical with that observed during normal operation.

Provided that α1 and α2 are the amounts by which the V and W phases are to be shifted, respectively, to make the phase identical with that observed during normal operation, the V- and W-phase currents Iv and Iw after the phase control are given by the following equations (14) and (15), respectively:

$$Iv = Im \cdot \sin\left(\omega t - \frac{2\pi}{3} + \alpha 1\right) \qquad \cdots (14)$$

$$Iw = Im \cdot \sin\left(\omega t - \frac{4\pi}{3} + \alpha 2\right) \qquad \cdots (15)$$

In this embodiment, α1 and α2 are, for example, -π/6 and π/6, respectively, and in this case, the resultant currents Ix and Iy are given by the following equations (16) and (17), respectively:

$$Ix = Im \cdot \left\{ -\frac{1}{2}\sin\left(\omega t - \frac{2\pi}{3} - \frac{\pi}{6}\right) - \frac{1}{2}\sin\left(\omega t - \frac{4\pi}{3} + \frac{\pi}{6}\right) \right\} = \frac{\sqrt{3}}{2}Im \cdot \sin(\omega t) \qquad \cdots (16)$$

$$Iy = Im \cdot \left\{ -\frac{\sqrt{3}}{2}\sin\left(\omega t - \frac{2\pi}{3} - \frac{\pi}{6}\right) + \frac{\sqrt{3}}{2}\sin\left(\omega t - \frac{4\pi}{3} + \frac{\pi}{6}\right) \right\} = \frac{\sqrt{3}}{2}Im \cdot \cos(\omega t)$$

$$\cdots (17)$$

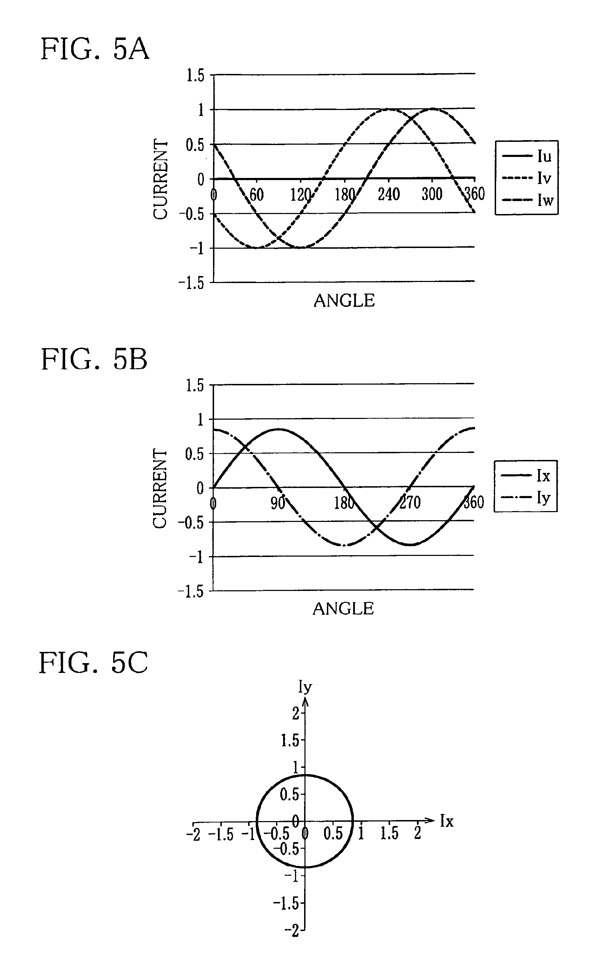

FIG. 5A illustrates waveforms of the V- and W-phase currents after the phase control, FIG. 5B illustrates waveforms of the resultant currents Ix and Iy, and FIG. 5C is a vector diagram of the resultant currents Ix and Iy. As illustrated in FIG. 5B, the phase difference between the resultant currents Ix and Iy is 90°, and the maximum and minimum values of the resultant current Ix are nearly equal to those of the resultant current Iy. Also, as illustrated in FIG. 5C, the current vector follows a nearly circular locus.

Further, as a result of the phase control, the phase of the current becomes arctan(cosωt/sinωt) = n/2 - ωt and thus is identical with that observed during normal operation.

In Step S5, the normal phase currents are subjected to gain correction (gain corrector, gain correction step).

As seen from FIGS. 2C and 5C, the magnitude of the current vector after the phase control is small, compared with that of the current vector observed during normal operation, with the result that the torque for rotating the motor runs short. To increase the torque by an amount corresponding to the shortfall, the gains of the currents are corrected.

Specifically, the V- and W-phase currents Iv and Iw after the gain correction are expressed by the following equations (18) and (19), respectively:

$$Iv = \mathrm{Im} \cdot \sin\left( \omega t - \frac{2\pi}{3} + \alpha 1 \right) \times \beta \qquad \cdots (18)$$

$$Iw = \mathrm{Im} \cdot \sin\left( \omega t - \frac{4\pi}{3} + \alpha 2 \right) \times \beta \qquad \cdots (19)$$

where β is a gain correction factor.

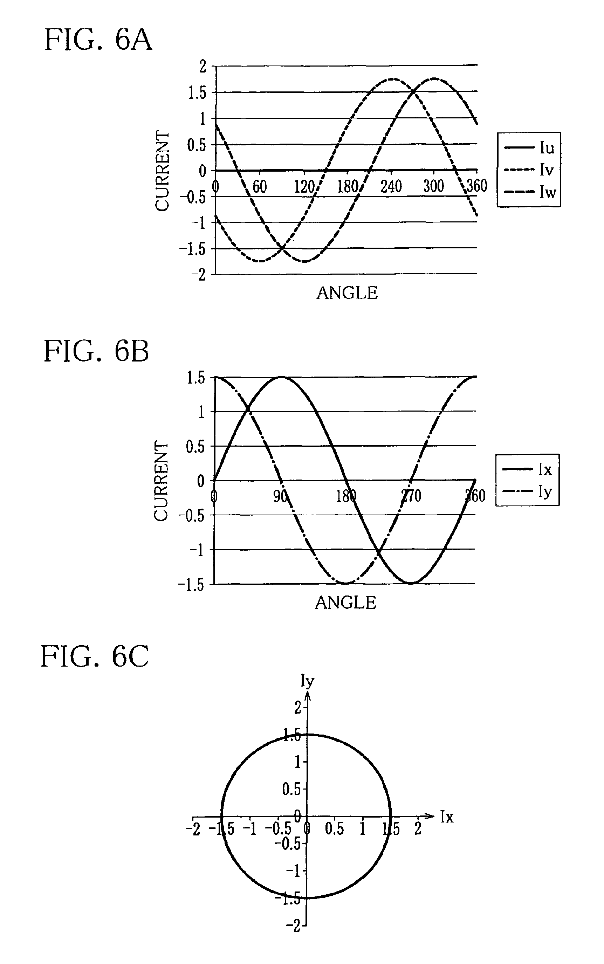

In this embodiment, each of the resultant currents observed during normal operation is 3/2 times the line current Im, and since each resultant current subjected to the phase control because of fault is √3/2 times the line current Im, the gain correction factor β for obtaining a current whose magnitude is nearly equal to that of the current observed during normal operation is given by: β=(3/2)/(√3/2)=√3. The V- and W-phase currents Iv and Iw after the gain correction have waveforms illustrated in FIG. 6A.

Accordingly, the resultant currents Ix and Iy after the gain correction are given by the following equations (20) and (21), respectively:

$$Ix = \frac{3}{2} \mathrm{Im} \cdot \sin(\omega t) \qquad \cdots (20)$$

$$Iy = \frac{3}{2} \mathrm{Im} \cdot \cos(\omega t) \qquad \cdots (21)$$

FIG. 6B is a graph showing waveforms of the resultant currents Ix and Iy after the gain correction, and FIG. 6C is a vector diagram of the resultant currents Ix and Iy. As illustrated in FIG. 6C, the gain correction makes it possible to obtain a current of which the magnitude is nearly equal to that of the current observed during normal operation.

Thus, in the brushless motor according to the embodiment, the neutral point 2a of the three-phase winding 2 and the neutral point 6a of the power supply are connected by the neutral line 8. If a fault of any one of the phases of the three-phase winding 2 is detected from the electrical signals input to the controller 10 from the current sensors 9, a faulty phase is discriminated, and the phases of the normal phase currents are varied such that the current vector of the resultant currents of the normal phases follows a nearly circular locus.

Where any one of the phases of the three-phase winding 2 fails, current flows through the neutral line 8, and since the mode of connection changes from the star connection to a V connection constituted by the remaining two normal phases, the motor can be continuously rotated. Also, since the phases of the normal phase currents are varied so that the rotating current vector may follow a nearly circular locus, the current supply is stabilized, whereby torque ripple can be reduced, enabling stable operation control.

The phase control is executed immediately after a fault is detected, so that the operation control can be stabilized, making it possible to improve reliability.

Further, after the detection of a fault, the normal phase currents are increased by the gain correction to make up for the shortfall of torque attributable to the fault, whereby stability of the motor operation can be further improved.

While the embodiment of the present invention has been described above, it is to be noted that the present invention is not limited to the foregoing embodiment alone.

For example, in the above embodiment, the phases of the normal V- and W-phase currents are controlled by the phase control executed in Step S4. In addition to this phase control, other phase control such as field weakening control may be executed.

Also, in the foregoing embodiment, the gain correction is executed in Step S5 in such a manner that the currents may have a magnitude equivalent to that of the currents observed during normal operation. The gain correction to be executed is not limited to such gain correction, and gain correction may be executed in such a manner that the magnitude of the currents may be reduced to an appropriate rate in order to protect the circuit from increased currents.

Further, in the above embodiment, the current sensors 9 for detecting fault are inserted in the respective lines connecting the inverter 4 to the three-phase winding 2. Fault detectors to be used are, however, not limited to the current detectors and may be voltage sensors for measuring the voltages across respective elements constituting the inverter 4, such as transistors, to detect fault. Also, the current sensors 9 of the above embodiment may be used in combination with such voltage sensors.

In the foregoing embodiment, moreover, fault of the three-phase wiring 2 as a whole is detected first, and then a faulty phase is discriminated. Alternatively, fault of each phase of the three-phase winding 2 may be detected.

**Claims**

1. A brushless motor having windings of multiple phases connected to an inverter, **characterized by** comprising:

   a neutral line (8) connecting a neutral point of a power supply and a neutral point of a star connection of the windings to each other;
   a fault detector (9) configured to detect a fault of the windings of the multiple phases and output fault detection information including information about presence or absence of fault of the individual phases;
   a faulty phase discriminator configured to determine, based on the fault detection information, whether each of the multiple phases is faulty or not if fault of any one of the multiple phases has been detected by the fault detector; and
   a phase controller configured to vary phases of normal phase currents which have been judged to be not faulty by the faulty phase discriminator such that a current vector obtained by decomposing the normal phase currents into orthogonal X- and Y-axis components to derive resultant currents and then combining the resultant currents follows a nearly circular locus.

2. The brushless motor according to claim 1, characterized further comprising a gain corrector configured to amplify the individual phase currents of the windings.

3. A control method for controlling a brushless motor having windings of multiple phases connected to an inverter, **characterized by** comprising:

   a fault detection step of detecting a fault of the windings of the multiple phases and outputting fault detection information including information about presence or absence of fault of the individual phases;
   a faulty phase discrimination step of determining, based on the fault detection information, whether each of the multiple phases is faulty or not if fault of any one of the multiple phases has been detected in the fault detection step; and
   a phase control step of varying phases of normal phase currents which have been judged to be not faulty in the faulty phase discrimination step such that a current vector obtained by decomposing the normal phase currents into orthogonal X- and Y-axis components to derive resultant currents and then combining the resultant currents follows a nearly circular locus.

4. The control method according to claim 3, **characterized by** further comprising a gain correction step, executed after the phase control step, of amplifying the individual phase currents of the windings.

# FIG. 1

FIG. 2A

FIG. 2B

FIG. 2C

# FIG. 3

```
                    ┌─────────────┐
                    │    START    │
                    └─────────────┘
                           │
                           ▼
        ┌──────────────────────────────────┐
        │    OPTIMIZE PHASE CURRENTS        │──S1
        └──────────────────────────────────┘
                           │
                           ▼        S2
                      ╱─────────╲
                     ╱   FAULT   ╲     No
                     ╲ DETECTED ? ╱─────────────┐
                      ╲─────────╱                │
                           │ Yes                 │
                           ▼                      │
        ┌──────────────────────────────────┐     │
        │    DISCRIMINATE FAULTY PHASE      │──S3 │
        └──────────────────────────────────┘     │
                           │                      │
                           ▼                      │
        ┌──────────────────────────────────┐     │
        │      SUBJECT NORMAL PHASE         │──S4 │
        │   CURRENTS TO PHASE CONTROL       │     │
        └──────────────────────────────────┘     │
                           │                      │
                           ▼                      │
        ┌──────────────────────────────────┐     │
        │        GAIN CORRECTION            │──S5 │
        └──────────────────────────────────┘     │
                           │                      │
                           ▼◄─────────────────────┘
                    ┌─────────────┐
                    │   RETURN    │
                    └─────────────┘
```

# FIG. 4A

# FIG. 4B

# FIG. 4C

FIG. 5A

FIG. 5B

FIG. 5C

# FIG. 6A

ANGLE

# FIG. 6B

ANGLE

# FIG. 6C

# FIG. 7

**EP 2 509 213 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002369586 A